# EUROPEAN PATENT APPLICATION

(11) **EP 1 612 915 A2**
(43) Date of publication of application: **04.01.2006**
(21) Application number: 05013986.4
(22) Date of filing: 28.06.2005
(51) Int. Cl.: H02K 5/136

(54) **Method and apparatus for dissipating shaft charge**

(30) Priority: 28.06.2004 US 878066
(71) Applicant: Reliance Electric Technologies, LLC, Mayfield Heights, Ohio 44124 (US)
(72) Inventor: Orders, Marcus D., Kings Mountain NC 28086 (US); Woodson, William T., Pelzer, SC 29669 (US); Schiferl, Rich F., Greer, SC 29651 (US); Melfi, Michael J., Euclid, OH 44117 (US)
(74) Representative: Jung HML

(57) **Abstract**

The present invention relates generally to dissipation of shaft charge. According to an exemplary embodiment, the present invention provides a charge-dissipating device that includes a dissipation member disposed in an explosion-proof enclosure. When mounted to a rotatable shaft of an electric motor, for example, the dissipation member is configured to generally abut against the rotatable shaft. The dissipation member dissipates shaft-charge developed in the rotatable shaft during operation of the motor. By dissipating shaft charge, the likelihood of arcing and/or bearing current (I_{b}) occurrences are reduced or eliminated. In accordance with another exemplary embodiment, a transmission member is configured to impart a voltage signal onto the shaft.

## Description

### BACKGROUND

The present invention relates generally to electromechanical systems, such as an electric motor. Although the following discussion focuses on electric motors, the present invention affords benefits to a number of electromechanical systems and devices that have rotatable elements. For example, the present invention is equally applicable to rotatable elements in gearboxes, press rolls, and conveyor systems, to name a few applications. Indeed, devices comprising shafts that acquire a charge can benefit from the present invention. Additionally, the invention could also be utilized to impose a voltage onto a rotatable shaft , for instance.

Electric motors of various types are commonly found in industrial, commercial and consumer settings. In industry, such motors are employed to drive various kinds of machinery, such as pumps, conveyors, compressors, fans and so forth, to mention only a few. Such motors generally include a stator, comprising a multiplicity of coils, surrounding a rotor, which is supported by bearings for rotation in the motor frame. When power is applied to the motor, an electromagnetic relationship between the stator and the rotor causes the rotor to rotate. Typically, a rotor shaft extending through the motor housing takes advantage of this produced rotation and translates the rotor's movement into a driving force for a given piece of machinery. That is, rotation of the rotor shaft drives the machine to which it is coupled.

Virtually all rotatable motors, generators, etc., develop some degree of rotor shaft-to-ground voltage (V_{rg}) that can result in bearing currents (I_{b}). Typically, electric motors have two sources of V_{rg}: electromagnetic induction and electrostatic coupling. Electromagnetic induction generally results from the electromagnetic relationships between the stator and the rotor. For example, small dissymmetry of the magnetic field in the air gap between the rotor and the stator due to motor construction can cause electromagnetically induced V_{rg} to develop in the rotor shaft. Electrostatic coupling, however, results from a number of situations in which rotor charge accumulation can occur. For example, ionized or high velocity air passing over a rotor may cause rotor charge accumulation. However, external sources to the motor generally give rise to the lion's share of the V_{rg} due to electrostatic coupling. For example, modern voltage source inverters, such as pulse width modulated (PWM) inverters, produce stepped voltage waveforms and, as such, high "net voltage" or common mode voltage (CMV) values. Thus, PWM inverters lead to the development of V_{rg} in the rotor shaft. As another example, direct current motors fed by rectified power sources can also cause V_{rg} in the shaft. In any case, the greater V_{rg}, the greater the likelihood of bearing currents (I_{b}) and arcing within the bearing. That is, V_{rg} may cause a discharge of current through the bearing. Similar phenomena occur in the case of dc motors fed by rectified sources as well.

Unfortunately, bearing currents (I_{b}) and/or arcing within the bearing can cause damage to mechanical components of the motor. For example, if V_{rg} reaches a sufficient threshold value, arcing occurs between the races of the bearing and the rolling elements within the bearing, leading to localized melting and rehardening of the mechanical components of the bearing, for instance. That is, an instantaneous discharge of current (I_{b}) through the bearing causes an arc and, as such, localized melting and subsequent rehardening of surfaces within the bearing. This melted and rehardened material is of a metallurgical structure known as untempered martensite. This material is not as robust as the original bearing material and can lead to fatigue failure - even under relatively light bearing loads. A bearing surface with untempered matensite leads to pitting and fluting of the bearing components and may cause the bearing assembly to malfunction or to fail prematurely. Additionally, continued bearing currents (I_{b}) produce heat that, over time, leads to premature degradation of the bearing lubricant, which ultimately can result in higher maintenance costs and downtime. Additionally, the non-zero shaft voltage with respect to ground may arc to any nearby grounded surface, including shaft guards and motor endcaps. In a hazardous location, such arcing has the potential to cause ignition of the hazardous materials.

To prevent such bearing degradation, some electric motors may include a dissipation brush, which bleeds off V_{rg} by creating a short circuit in the system. However, traditional dissipation brush devices are not suitable for use in hazardous environments. For example, traditional dissipation brush devices fail to sufficiently account for the potential of danger due to electrical arcing between the rotor shaft and the dissipation brush, for instance. Accordingly, traditional dissipation brush devices are not suitable for use in many mining, industrial, and petroleum applications, where the ignition of a combustible atmosphere, for example, is a relevant concern.

Accordingly, there is a need for improved apparatus and methods for dissipation shaft charge for motors operating in hazardous environments.

### BRIEF DESCRIPTION

According to one embodiment, the present invention comprises an apparatus for use with an electrical device, such as an electric motor and/or various rotatable components of the electric motor. However, as discussed above, the present invention is applicable to a number of devices that employ rotatable elements, such as gearboxes, conveyor systems, and belt drives, to name a few. The apparatus comprises an explosion-proof enclosure and a dissipation member nonrotatably disposed in the enclosure. When installed with respect to the electrical device, the dissipation member of the exemplary apparatus generally abuts a rotatable member of the device, which is at least partially disposed within the explosion-proof enclosure. To dissipate charge developed in the rotatable member during operation of the electrical device, the dissipation member of the exemplary apparatus is configured to electrically couple the rotatable member to ground. Advantageously, by dissipating the charge or voltage in the rotatable member, the likelihood of damage due to arcing and bearing currents (I_{b}) may be mitigated in the bearing assembly that supports the rotatable member.

According to another exemplary embodiment, the present invention provides an electric motor. The electric motor comprises a rotor, stator, and bearing assembly disposed within an explosion-proof motor housing or enclosure. The electric motor also includes a brush member disposed in the explosion-proof motor housing as well. In the exemplary motor, the brush member is configured to generally abut the rotor shaft and to facilitate dissipation of shaft charge developed in the rotor shaft during operation of the motor. Because the brush member is disposed within the explosion-proof motor enclosure, the exemplary motor provides applicability to certain hazardous environments, such as those found in petroleum and mining applications, for example. Moreover, the brush member can be configured to impart a desired voltage signal onto the shaft.

According to yet another exemplary embodiment, the present invention provides an apparatus for use with a device having a rotatable device member. The exemplary apparatus comprises a self-contained explosion-proof enclosure. The apparatus also includes a rotatable shaft at least partially disposed in the explosion-proof enclosure and supported by a bearing assembly that is also housed in the explosion-proof enclosure. To engage with the rotatable device member, the rotatable shaft includes a coupling mechanism configured to couple the rotatable device member and the rotatable shaft mechanically and electrically with respect to one another. The exemplary apparatus also includes a dissipation member nonrotatably housed in the explosion-proof enclosure such that the dissipation member is configured to generally abut the rotatable shaft. To mitigate the likelihood of damage in the device due to charge build-up in the rotatable device member during operation of the device, the dissipation member is configured to couple the rotatable shaft and, as such, the rotatable device member electrically to ground.

As yet another exemplary embodiment, the present invention provides a method for dissipating charge build-up in a rotatable member of the device during operation of the device. The method comprises disposing a dissipation brush in an explosion-proof enclosure such that the dissipation brush is configured to generally abut the rotatable device member that is also at least partially disposed in the explosion-proof enclosure. Additionally, the method comprises electrically coupling the dissipation brush to ground. Advantageously, the exemplary method mitigates the likelihood of damage within a bearing assembly of the device due to arcing and bearing currents, for example.

### DRAWINGS

The foregoing and other advantages and features of the invention will become apparent upon reading the following detailed description and upon reference to the drawings in which:

Fig. 1 is a perspective view of an electric motor having features in accordance with an embodiment of the present invention;

Fig. 2 is a partial cross-section view of the motor of Fig. 1 along line 2-2;

Fig. 3 is a partial cross-section view of an exemplary shaft charge-dissipation mechanism mounted to a motor enclosure, in accordance with an embodiment of the present invention; and

Fig. 4 is a partial cross-section view of a charge-dissipating device located between a motor and a driven device, such that the charge-dissipating device couples the motor and the driven device, in accordance with an embodiment of the present invention.

### DETAILED DESCRIPTION

As discussed in detail below, embodiments of the present invention provide apparatus and methods for dissipating charge build-up within rotatable members of devices operable in hazardous environments. Although the discussion regarding the present invention focuses on electric motors, the present invention is equally applicable to a number of applications in which a rotatable member develops charge during operation. For example, the present invention is applicable to conveyor systems, gearboxes, and drive mechanisms, to name but a few applications. Additionally, the term "explosion-proof" appears throughout the present discussion to describe various items. As employed herein, the term "explosion-proof" refers to an enclosure that is configured to withstand the pressure of an explosive mixture exploding inside the enclosure and to prevent the propagation of the explosion to the atmosphere surrounding the enclosure. By way of example, associations, such as the National Electrical Manufacturers' Association (NEMA), and regulatory institutions, such as Underwriters Laboratory (UL) and the National Fire Protection Association (NFPA), which propagates the National Electric Code (NEC), provide standards for establishing the specific parameters pertaining to an explosion-proof enclosure. Moreover, these associations and institutions often test various enclosures to ensure that such enclosures meet their respective standards.

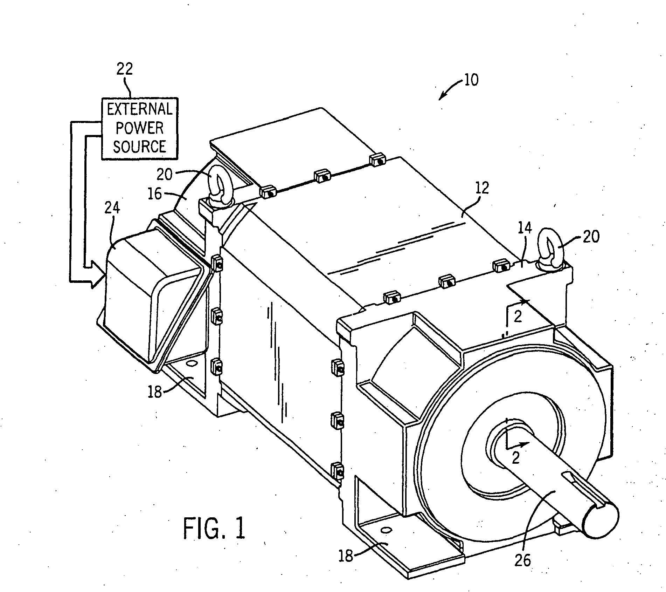

Turning to the drawings, Fig. 1 illustrates an exemplary electric motor 10. In the embodiment illustrated, the motor 10 comprises an induction motor housed in a motor housing, which is an explosion-proof NEMA enclosure. The exemplary motor 10 comprises a frame 12 capped at each end by opposite drive end and drive end endcaps 14 and 16, respectively. The frame 12 and the opposite drive end and drive end endcaps 14 and 16 cooperate to form the explosion-proof enclosure or motor housing for the motor 10. The frame 12 and the opposite drive end and drive end endcaps 14 and 16 may be formed of any number of materials, such as cast iron, steel, aluminum, or any other suitable structural material. However, the construction of the exemplary motor 10 (i.e., material selection, dimensioning, and fabrication qualities) provides an explosion-proof rating to the motor 10. The endcaps 14 and 16 may include mounting and transportation features, such as the illustrated mounting feet 18 and eyehooks 20. Those skilled in the art will appreciate in light of the following description that a wide variety of motor configurations and devices may employ the charge-controlling techniques outlined below.

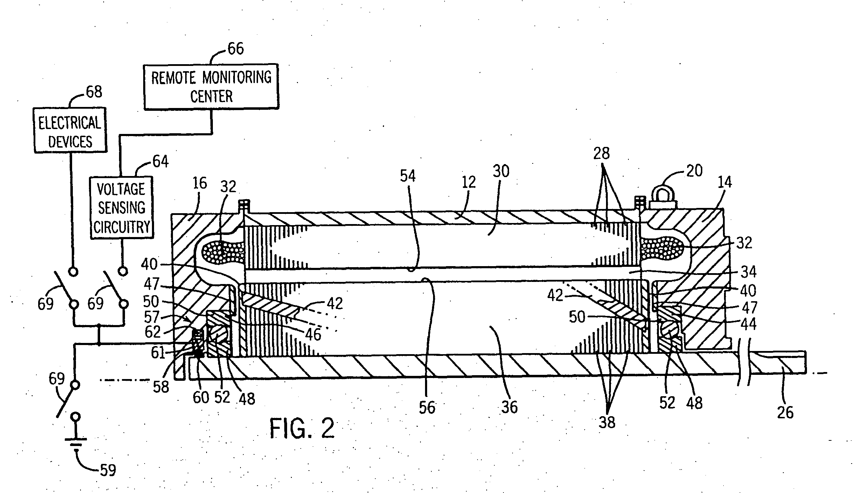

To induce rotation of the exemplary rotor, current is routed through stator windings disposed in the stator. (See Fig. 2.) Stator windings are electrically interconnected to form groups, which are, in turn, interconnected in a manner generally known in the pertinent art. The stator windings are further coupled to terminal leads (not shown), which electrically connect the stator windings to an external power source 22. As an example, the external power source 22 may comprise an ac pulse width modulated (PWM) inverter. As yet another example, the power source 22 may comprise a dc power source or a three phase ac power soruce. In any event, a conduit box 24 houses the electrical connection between the terminal leads and the external power source 22 for the exemplary motor 10. The conduit box 24 comprises a metal or plastic material and, advantageously, provides access to certain electrical components of the motor 10. However, in the discussed embodiments, the conduit box 24 presents an explosion-proof construction.

Routing electrical current from the external power source 22 through the stator windings produces a magnetic field that induces rotation of the rotor. A rotor shaft 26 coupled to the rotor rotates in conjunction with the rotor. That is, rotation of the rotor translates into a corresponding rotation of the rotor shaft 26. To support and facilitate rotation of the rotor and the rotor shaft 26, the exemplary motor 10 includes opposite drive end and drive end bearing sets carried within the opposite drive end and drive end endcaps 14 and 16, respectively. (See Fig. 2.) As appreciated by those of ordinary skill in the art, the rotor shaft 26 may couple to any number of drive machine elements, thereby transmitting torque to the given drive machine element. By way of example, machines such as pumps, compressors, fans, conveyors, and so forth, may harness the rotational motion of the rotor shaft 26 for operation.

Fig. 2 provides a partial cross-section view of the motor 10 of Fig. 1 along line 2-2. To simplify the discussion, only the top portion of the motor 10 is shown, as the structure of the motor 10 is essentially mirrored along its centerline. As discussed above, the frame 12 and the opposite drive end and drive end endcaps 14 and 16 cooperate to form an explosion-proof enclosure or motor housing for the motor 10. Thus, as appreciated by those of ordinary skill in the art, the exemplary motor housing presents a construction of sufficient strength to withstand the pressure of an explosive atmosphere exploding inside the housing. Moreover, the explosion-proof motor housing prevents propagation of the explosion to the atmosphere surrounding the housing. Within the enclosure or motor housing resides a plurality of stator laminations 28 juxtaposed and aligned with respect to one another to form a stator core 30. The stator laminations 28 each include features that cooperate with one another to form slots that extend the length of the stator core 30 and that are configured to receive one or more turns of a coil winding 32, illustrated as coil ends in Fig. 2. Each stator lamination 28 also has a central aperture. When aligned with respect to one another, the central apertures of the stator laminations 28 cooperate to form a contiguous rotor passageway 34 that extends through the stator core 30.

In the exemplary motor 10, a rotor 36 resides within this rotor passageway 34. Similar to the stator core 30, the rotor 36 comprises a plurality of rotor laminations 38 aligned and adjacently placed with respect to one another. Thus, the rotor laminations 38 cooperate to form a contiguous rotor 36. The exemplary rotor 36 also includes rotor end rings 40, disposed on each end of the rotor 36, that cooperate to secure the rotor laminations 38 with respect to one another. The exemplary rotor 36 also includes rotor conductor bars 42 that extend the length of the rotor 36. In the exemplary motor 10, the end rings 40 electrically couple the conductor bars 42 to one another. Accordingly, the conductor bars 42 and the end rings 40 comprise nonmagnetic, yet electrically conductive materials. As discussed below, inducing current in the rotor 36, specifically in the conductor bars 42, causes the rotor 36 to rotate. By harnessing the rotation of the rotor 36 via the rotor shaft 26, a machine coupled to the rotor shaft 26, such as a pump or conveyor, may operate.

To support the rotor 36, the motor 10 includes opposite drive end and drive end bearing sets 44 and 46 that are secured to the rotor shaft 26 and that facilitate rotation of the rotor shaft 26 and rotor 36 within the stator core 30. By way of example, the exemplary bearing sets present a ball bearing construction; however, the bearing sets may present a sleeve bearing construction, among other types of bearing constructions. Advantageously, the endcaps 14 and 16 include features, such as the illustrated inner bearing caps 47, that secure the bearing sets 44 and 46 within their respective endcaps 14 and 16. In the exemplary motor 10, the inner bearing caps comprise assemblies that are releaseably secured to the end caps 14 and 16. The bearing sets 44 and 46 transfer the radial and thrust loads produced by the rotor shaft 26 and rotor 30 to the motor housing. Each bearing set 44 and 46 includes an inner race 48 disposed circumferentially about the rotor shaft 26. The fit between the inner races 48 and the rotor shaft 26 causes the inner races 48 to rotate in conjunction with the rotor shaft 26. Each bearing set 44 and 46 also includes an outer race 50 and rolling elements 52 disposed between the inner race 48 and the outer race 50. The rolling elements 52 facilitate rotation of the inner races 48 while the outer races 50 remains stationarily mounted with respect to the endcaps 14 and 16. Thus, the bearing sets 44 and 46 facilitate rotation of the rotor shaft 26 and the rotor 36 while providing a support structure for the rotor 36 within the motor housing, i.e., the frame 12 and the endcaps 14 and 16. To improve the performance of the bearing sets 44 and 46, a lubricant coats the rolling elements 52 and race 48 and 50, providing a separating film between to bearing components, thereby mitigating the likelihood of seizing, galling, welding, excessive friction, and/or excessive wear, to name a few adverse effects.

During operation of the motor 10, current passing through the stator windings 32 electromagnetically induces current in the conductor bars 42, thereby causing the rotor 36 and rotor shaft 26 to rotate. In addition, the common mode voltage (CMV) in the stator windings 32 causes a charge to build up on the inner surface 54 of the stator core 30. As charge builds on the inner surface 54 of the stator core 30, an electric field is produced. In turn, this electric field causes parasitic capacitive coupling between the inner surface 54 of the stator core 30 and the outer surface 56 of the rotor 36. In essence, the air gap between the rotor 36 and the stator core 30 acts as a dielectric, while the inner surface 54 of the stator core 30 and the outer surface 56 of the rotor 36 cooperate as plates of a capacitor, which accumulate charge.

Additionally, the electrical communicativeness between rotor shaft 26 and the bearing sets 44 and 46 causes a charge build-up in the inner race 48 of the respective bearing sets 44 and 46. However, as discussed above, the lubricant coating the rolling elements 52 the races and 48 and 50 of the respective bearing sets 44 and 46 acts as a dielectric. Accordingly, the lubricant facilitates capacitive coupling between the races 48 and 50 and the rolling elements 52. Unfortunately, when charge build-up on the inner race 48 exceeds the lubricant's electric field breakdown threshold, for instance, electrons begin to move between the previously isolated races 48 and 50 and the rolling elements 52. This movement of electrons in the bearing sets is referred to as bearing current (I_{b}). Often, I_{b} results in arcing between the rolling elements 52 and the races 48 and 50, thereby causing pitting and fluting on the various surfaces of the bearing sets 44 and 46, for instance. By way of example, the bearing current (I_{b}) can lead to metallurgical damage of components of the bearing sets. A similar effect occurs in the case of sleeve bearings, but between the shaft and bearing surface, without any intermediate rolling elements.

To dissipate the build-up of charge in the rotor shaft 26 and, as such, to reduce the occurrence of arcing and I_{b} within the bearing sets, the exemplary motor 10 includes at least one charge-dissipating mechanism, such as the exemplary dissipation assembly 57. In summary, the exemplary dissipation assembly 57 provides an electrical pathway to dissipate the build-up of charge on the rotor shaft 26. By dissipating the build-up of charge on the rotor shaft 26, the likelihood of arcing and bearing current (I_{b}) occurring in the bearing set is reduced.

In the exemplary embodiment illustrated in Fig. 2, the dissipation assembly 57 includes a dissipation member, such as a dissipation brush 58, housed within at least one of the endcaps of the motor 10. However, in alternate configurations, both endcaps 14 and 16, both inner bearing caps 47, and/or the frame 12 may support the dissipation brush 58. The dissipation brush 58 circumferentially surrounds and generally abuts the rotor shaft 26; however, other configurations are also envisaged. For example, the motor 10 may include multiple dissipation brushes 58 that abut only a portion of the rotor shaft's circumference, i.e., partially surrounds. Indeed, the dissipation member may comprise other configurations and need not be limited to the dissipation brush 58 presently described. Rather, dissipation members include any number of elements that generally abut the rotor shaft 26 without significantly impeding the rotor shaft's rotation. The exemplary dissipation brush 58 comprises a brush portion 60 that generally abuts the rotor shaft 26 and a holder portion 61 that supports the brush portion 60. To prevent the migration of charge from the rotor shaft 26 to the frame 12 and/or endcap 14, the holder portion 61 may comprise an electrically insulative material, such as plastic. The exemplary brush portion 60 comprises one or more conductive pieces, which may comprise graphite or carbon based materials, that contact the rotor shaft 26. Moreover, the dissipation brush 58 may comprise any number of suitable electrically conductive materials, such as blended materials and electrographite materials, to name a few. Although the dissipation brush 58, specifically the brush portion 60, abuts the rotor shaft 26, the dissipation brush 58 does not rotate with the rotor shaft 26. That is, the dissipation brush 58 is nonrotatably housed in the corresponding endcap. Accordingly, the dissipation brush 58 provides an electrical connection to the rotor shaft 26 without impeding the rotation of the rotor shaft 26. To maintain engagement with rotor shaft 26, a biasing member, such as a compression spring 62, interacts with the endcap 14 and/or 16 and the holder portion 61 to bias the dissipation brush 58 and its brush portion 60 toward and into engagement with the rotor shaft 26. However, from time-to-time, the ground brush 58 may separate with respect to rotating shaft due to forces produced during operation of motor 10. However, these separation forces are quickly overcome by the compression spring 62.

Because the dissipation brush 58 is housed within the motor housing (i.e., the frame 12 and the endcaps 14 and 16), the dissipation brush 58 is housed within an explosion-proof enclosure. Thus, the exemplary explosion-proof motor housing is capable of withstanding an explosion produced by arcing between the dissipation brush 58 and the rotating shaft 26, for instance, and prevents propagation of the explosion to the atmosphere external to the motor housing. That is, the dissipation brush 58 and the motor housing cooperate to provide a mechanism to dissipate the build-up of charge on the rotor shaft 26 produced during operation of the motor 10 in a hazardous environment.

As discussed above, the rotor shaft 26 develops a build-up of charge or V_{rg} during operation of the motor. However, the dissipation brush 58, via the brush portion 60, provides an electrical pathway to dissipate this charge, thereby mitigating the likelihood of V_{rg} of surpassing the threshold level of the bearing lubricant and, as such, the likelihood of arcing and bearing current (I_{b}) occurring, for instance.

Additionally, the member 58 may be configured to impart a voltage onto the shaft 26, i.e., a transmission member. For example, the transmission member 58 may impart a voltage signal onto the shaft 26 that could be indicative of an operating condition, for instance. Moreover, the transmission member 58 may impart a voltage to prevent against corrosion on the shaft 26.

In the exemplary embodiment, the dissipation brush 58 is electrically coupled to various electrical pathways. As one example, the dissipation brush 58 is electrically coupled directly to ground 59, which may be an earth ground or frame ground, for example. However, the dissipation brush 58 also may communicate with other electrical devices and circuits via alternate pathways. For example, the dissipation brush 58 may electrically communicate with voltage sensing circuitry (VSC) 64, which is configured to determine the voltage level (e.g., V_{rg}) developed in the rotor shaft 26 during operating of the motor 10. Advantageously, the voltage sensing circuitry 64 may include communication circuitry that facilitates communication of the sensed voltage level to a remote location, such as a remote monitoring center 66. As yet another example, dissipating current traveling though the dissipation brush 58 may be harnessed to provide at least some operating power to various electrical devices 68 (e.g., clutch mechanisms, instrumentation, indicators). For example, the dissipation of the rotor shaft 26 charge (V_{rg}) may produce a current that may be harnessed to provide at least a portion of the operating power to the various electrical devices 68 of the motor 10. Advantageously, these various electrical pathways may include switches 69 that facilitate selective transition between the various electrical pathways. Alternatively, there may also be a plurality of brushes inside the motor housing, each dedicated for its own purpose and circuit.

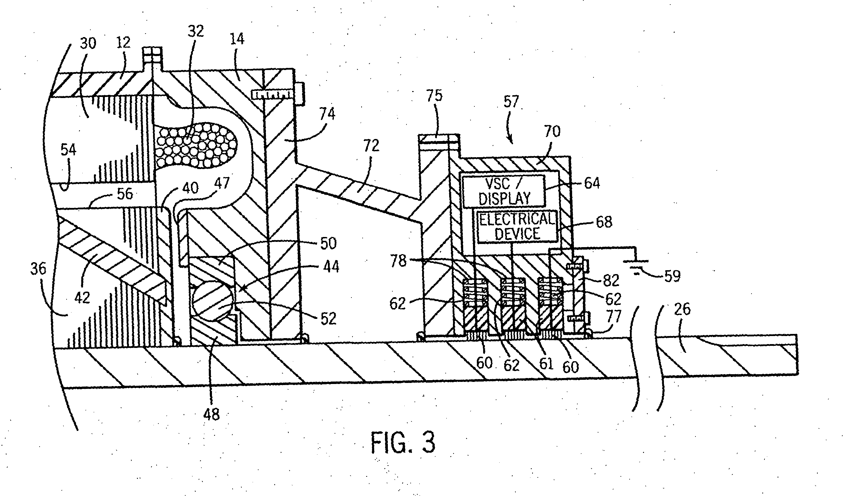

Fig. 3 illustrates an alternate embodiment of a charge-dissipating mechanism of the present invention. Only the top portion is illustrated, as the illustrated portion below the centerline essentially mirrors the illustrated portion. The exemplary charge-dissipating mechanism, such as illustrated the dissipation assembly 57, includes a self-contained explosion-proof enclosure 70 mounted externally with respect to the motor housing, specifically to the drive end endcap 14 of the motor 10. As discussed further below, the exemplary dissipation assembly 57 provides a self-contained unit that is mountable to an existing motor 10 to provide a mechanism for dissipating the build-up of charge in the rotor shaft 26. To facilitate external mounting, the dissipation assembly 57 cooperates with a mounting bracket 72. The exemplary mounting bracket 72 may also include a first flange portion 74 that is configured to mount to the drive end endcap 14 and a second flange portion 75 that is configured to secure the explosion-proof enclosure 70 to the mounting bracket 72. The mounting bracket 72 also includes a center portion 76 that is frustroconical in shape and that couples the first and second flange portions to one another. Advantageously, the frustroconical shape of the exemplary center portion 76 facilities mounting of a standard sized explosion-proof enclosure 70 to differently sized motor housings and endcaps 14. Indeed, the mounting bracket 72 may present a number of configurations and shapes to accommodate the desired application and/or configuration of the motor and driven element. For example, the exemplary charge-dissipating assembly may be mounted to either the drive end or non-drive end of the motor or driven assembly. Both the explosion-proof enclosure 70 and the mounting bracket 72 include a channel extending through the respective structures for receiving the rotor shaft 26 therethrough. Advantageously, the explosion-proof enclosure 70 and the mounting bracket 72 may include seal mechanisms, such as a lip seal 77, located at the entrances of the channel for the rotor shaft 26 to prevent the ingress of particulates into the motor 10 and the explosion-proof enclosure 70.

The explosion-proof enclosure 70 houses either one or a plurality of dissipation brushes 58 that abut the rotor shaft 26, which extends through the enclosure 70 when the dissipation assembly 57 is mounted to a motor 10. Specifically, the dissipation brushes 58 are housed in a series of chambers 78. To maintain abutment between the dissipation brushes 58 and the rotor shaft 26, biasing members, such as the illustrated compression springs 62 located in the chambers 78, bias the dissipation brushes 58 toward the rotor shaft 26. To access the dissipation brushes 58, the exemplary explosion-proof enclosure 70 includes an access panel 82. The access panel 82 is removably mounted to the enclosure 70 and, as such, facilitates the removal or replacement of the dissipation brushes 58 from the explosion-proof enclosure 70, if so desired. It will be recognized that the access panel may be positioned at various locations to most advantageously access the interior of the explosion-proof enclosure 70.

In the exemplary embodiment, the dissipation assembly 57 includes three dissipation brushes 58, each electrically coupled to three different electrical pathways. The dissipation brush 58 located furthest away from the motor 10 is coupled directly to ground 59, which, as discussed above, may be earth ground or frame ground, for example. A second pathway electrically couples the dissipation brush 58 located closest to the motor 10 to the VSC 64 and a display. Advantageously, the VSC determines a voltage level (e.g., V_{rg}) developed in the rotor shaft 26 during operation. Moreover, the VSC may communicate with the display to display the determined voltage level to a technician or operator. A third electrical pathway electrical couples the third and intermediate dissipation brush 58 to an electronic device 68, such as instrumentation or a clutch mechanism, for example. In the third electrical pathway, the dissipating charge from the rotor shaft 26 produces a current in this pathway that can provide at least some operating power to the electronic device 68. The VSC circuitry 64 and the electrical device 68 may be local to the dissipation assembly 57, or they may be remotely located with respect to both the motor 10 and the dissipation assembly 57, for example.

Advantageously, the embodiment of Fig. 3 provides a self-contained dissipation assembly 57 that may be retrofitted to existing motors 10. Moreover, the self-contained unit provides advantages to devices other than motors. For example the self-contained dissipation assembly 57 can be coupled to any number of devices that employ a rotating member or shaft, such as conveyor systems or gearboxes. Moreover, the explosion-proof enclosure 70 of the dissipation assembly 57 provides a mechanism through which rotor shaft 26 charge may be dissipated in an explosion-proof manner in, for example, hazardous environments, such as mining or petroleum applications.

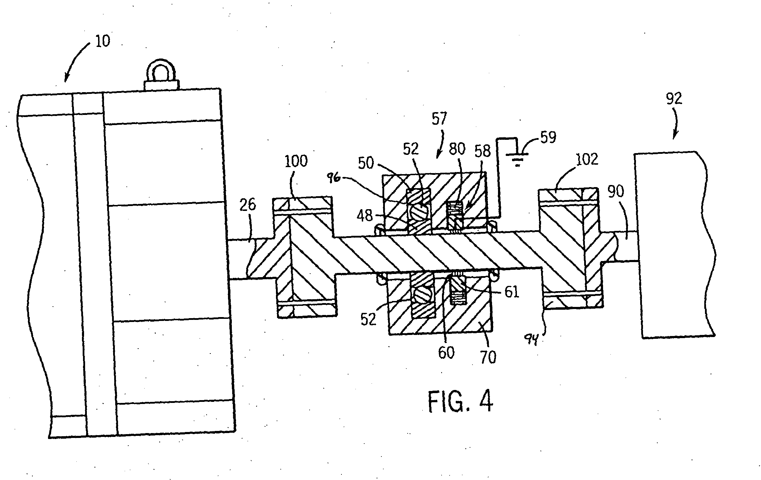

Fig. 4 illustrates an alternate embodiment of the charge-dissipating device of the present invention. In this embodiment, the dissipation assembly 57 provides a mechanism to couple the rotor shaft 26 of the motor 10 to a drive shaft 90 of a driven machine 92. Similar to the embodiment of Fig. 3, the dissipation assembly 57 is a self-contained assembly. Accordingly, the dissipation assembly 57 includes a self-contained explosion-proof enclosure 70. The dissipation assembly 57 also includes a grounding shaft 94 that extends through the explosion-proof enclosure 70. The grounding shaft 94 is supported by at least one bearing set 96 housed within the enclosure 70. The bearing sets 96 may present a number of constructions, such as a ball bearing (or other rolling element bearing) construction or a sleeve bearing construction, to name but a few types of construction. Advantageously, to prevent the ingress of containments into the explosion-proof enclosure 70, the dissipation assembly 57 can include seal assemblies, such as lip seals or labyrinth seals, located at the rotor shaft 26 openings 98 in the explosion-proof enclosure 70.

The grounding shaft 94 includes features that facilitate coupling of the grounding shaft 94 to the rotor shaft 26 and to the drive shaft 90. For example, a first end 100 of the grounding shaft 94 is configured to mate with the rotor shaft 26. Additionally, a second end 102 of the grounding shaft 94, which is opposite the first end 100, is configured to mate with a drive shaft 90. When mated, the grounding shaft 94 physically couples the drive shaft 90 and the rotor shaft 26 to one another. Accordingly, rotation of the rotor shaft 26 produces rotation in the grounding shaft 94 and, in turn, in the drive shaft 90. Advantageously, the grounding shaft 94 can include coupling features that mitigate the negative effects of misalignments between the various shafts and that improve the transfer of torque between the shafts.

Additionally, the conductive nature of the grounding shaft 94 electrically couples the grounding shaft 94 to the rotor shaft 26 and to the drive shaft 90. Accordingly, the build-up of charge on the rotor shaft 26 and on the drive shaft 90 during operation of the motor 10 and driven machine 92, respectively, is communicated to the grounding shaft 94. To dissipate this build-up of charge on the grounding shaft 94 and, as such, the drive shaft 90 and the rotor shaft 26, the dissipation assembly 57 includes a dissipation brush 58 nonrotatably housed within the explosion-proof enclosure 70. The dissipation brush 58 generally abuts the grounding shaft 94 and, as such, is electrically coupled to the grounding shaft 94. By coupling the dissipation brush 58 to ground 59 (e.g., frame ground, earth ground, etc.), the dissipation brush 58 provides a path to ground to dissipate the build-up of charge on the rotor shaft 26 and the drive shaft 90. Advantageously, dissipating this build-up of charge mitigates the likelihood of damage to bearing sets in both the motor 10 and the driven machine 90 due to arcing and bearing currents, for example.

While the invention may be susceptible to various modifications and alternative forms, specific embodiments have been shown by way of example in the drawings and have been described in detail herein. However, it should be understood that the invention is not intended to be limited to the particular forms disclosed. Although the present discussion focused on electric motors, the present invention provides benefits to a number of devices in which a rotating member is employed. Indeed, the invention is to cover all modifications, equivalents, and alternatives falling within the spirit and scope of the invention as defined by the following appended claims.

In summary the present invention relates generally to dissipation of shaft charge. According to an exemplary embodiment, the present invention provides a charge-dissipating device that includes a dissipation member disposed in an explosion-proof enclosure. When mounted to a rotatable shaft of an electric motor, for example, the dissipation member is configured to generally abut against the rotatable shaft. The dissipation member dissipates shaft-charge developed in the rotatable shaft during operation of the motor. By dissipating shaft charge, the likelihood of arcing and/or bearing current (I_{b}) occurrences are reduced or eliminated. In accordance with another exemplary embodiment, a transmission member is configured to impart a voltage signal onto the shaft.

## Claims

1. An apparatus for use with an electrical device, comprising:
an explosion-proof enclosure; and
at least one dissipation member nonrotatably housed in the enclosure and configured to generally abut a rotatable member of the electrical device at least partially disposed in the enclosure, wherein the dissipation member is configured to dissipate charge in the rotatable member produced during operation of the device.

2. The apparatus as recited in claim 1, wherein the dissipation member comprises a dissipation brush.

3. The apparatus as recited in claim 1 or 2, wherein the explosion-proof enclosure includes a motor housing endcap, and wherein the dissipation member is housed in the endcap.

4. The apparatus as recited in claim 1, 2 or 3, comprising voltage-sensing circuitry configured to determine a voltage level in the rotatable member during operation of the electrical device.

5. The apparatus as recited in one of claims 1 to 4, wherein the dissipation member is configured to electrically couple the rotatable member to ground.

6. The apparatus as recited in one of claims 1 to 5, wherein the explosion-proof enclosure is self-contained and externally mountable to the electrical device.

7. An electric motor, comprising:
an explosion-proof motor housing including first and second endcaps and a frame disposed between the first and second endcaps;
a stator assembly housed in the explosion-proof motor enclosure, the stator assembly having a stator aperture extending from a first stator end to a second stator end generally opposite the first stator end;
a rotor assembly disposed in the stator aperture, the rotor assembly including a rotor shaft extending at least from a first rotor end to a second rotor end generally opposite the first rotor end;
a bearing assembly housed in the explosion-proof motor housing and configured to rotatably support the rotor assembly; and
a brush member disposed in the explosion-proof motor housing and configured to generally abut the rotor shaft, wherein the brush member facilitates dissipation of rotor shaft charge developed in the rotor shaft during operation of the motor.

8. The electric motor as recited in claim 7, wherein the brush member comprises a carbon brush.

9. The electric motor as recited in claim 7 or 8, wherein at least the brush member comprises a blended material.

10. The electric motor as recited in claim 7, 8 or 9, wherein the stator assembly is configured to receive current from a pulse width modulated (PWM) power source.

11. The electric motor as recited in one of claims 7 to 10, comprising voltage-sensing circuitry electrically in communication with the brush member and configured to determine a voltage level in the rotor shaft.

12. The electric motor as recited in one of claims 7 to 11, comprising an electronic component electrically in communication with the brush member, such that the electronic component receives operating power via the brush member during operation of the motor.

13. An apparatus for use with a device having a rotatable device member, comprising:
an explosion-proof enclosure;
a rotatable shaft at least partially disposed in the explosion-proof enclosure and supported by a bearing assembly housed in the explosion-proof enclosure, the rotatable shaft having a coupling mechanism configured to couple the rotatable device member and the rotatable shaft mechanically and electrically with one another; and
a dissipation member nonrotatably housed in the explosion-proof enclosure such that the dissipation member is configured to generally abut the rotatable shaft, wherein the dissipation member is configured to couple the rotatable shaft and the rotatable device member electrically to ground.

14. The apparatus as recited in claim 13, comprising voltage-sensing circuitry configured to determine a voltage level in the rotatable device member during operation of the device.

15. The apparatus as recited in claim 14, comprising a display configured to display the voltage level in the rotatable device member.

16. The apparatus as recited in claim 14 or 15, wherein the voltage-sensing circuitry is configured to communicate with a remote location.

17. The apparatus as recited in any of claims 13 to 16, wherein the rotatable shaft comprises a second coupling mechanism configured to mechanically couple the rotatable shaft to a second rotatable device member of a second device.

18. The apparatus as recited in claim 17, wherein the second coupling mechanism electrically couples the rotatable shaft with the second rotatable device member, and wherein the dissipation member electrically couples the second rotatable device member to ground.

19. An apparatus for use with a device having a rotatable device member, comprising:
an explosion-proof enclosure having an aperture configured to receive the rotatable device member such that the rotatable device member is at least partially disposed within the explosion-proof enclosure; and
a brush member disposed in the explosion-proof-enclosure and configured to generally abut the rotatable device member, wherein the brush member is configured to dissipate charge developed in the rotatable device member during operation of the device.

20. The apparatus as recited in claim 19, wherein the brush member comprises a carbon dissipation brush.

21. The apparatus as recited in claim 19, wherein the apparatus comprises a mounting structure configured to mount the explosion-proof enclosure to the device.

22. The apparatus as recited in claim 21, wherein the mounting structure comprises a first flange configured to secure to the mounting structure to the device and a second flange configured to secure the mounting structure to the explosion-proof enclosure.

23. The apparatus as recited in any of claims 19 to 22, wherein the explosion-proof enclosure comprises an access aperture for removing the dissipation member from the explosion-proof enclosure.

24. The apparatus as recited in any of claims 19 to 23, comprising voltage-sensing circuitry configured to determine a voltage level in the rotatable device member during operation of the device.

25. The apparatus as recited in claim 24, wherein the voltage-sensing circuitry comprises communication circuitry configured to transmit a signal representative of the determined voltage level to a remote location.

26. The apparatus as recited in any of claims 19 to 25, wherein the brush member is configured to couple the rotatable device member to ground.

27. A kit for use with a device having a rotatable device member, comprising:
an explosion-proof enclosure; and
a dissipation brush configured to be housed in the explosion-proof enclosure such that the dissipation brush generally abuts the rotatable device member, wherein the dissipation brush is configured to electrically couple the rotatable device member to ground during operation of the device.

28. The kit as recited in claim 27, wherein the explosion-proof enclosure comprises an access aperture for removing the dissipation brush from the explosion-proof enclosure.

29. The kit as recited in claim 27 or 28, comprising a mounting structure for mounting explosion-proof enclosure to the device.

30. A system, comprising:
an electronic device having at least one rotatable device member, wherein the electronic device is configured to receive operating power from an external power source; and
a dissipation brush disposed in an explosion-proof enclosure such that the dissipation brush generally abuts the rotatable device member, wherein the dissipation brush is configured to dissipate charge in the rotatable device member developed during operation of the electronic device.

31. The system as recited in claim 30, comprising voltage-sensing circuitry configured to determine a voltage level in the rotatable device member.

32. The system as recited in claim 30 or 31, comprising a remote display in communication with the voltage-sensing circuitry and configured to display the determined voltage level.

33. The system as recited in claim 30, 31 and 32 wherein the power source provides alternating current (ac) power.

34. The system as recited in any of claims 30 to 33, wherein the power source provides a pulse with modulated (PWM) power.

35. The system as recited in any of claims 30 to 34, wherein the electronic device comprises an electric motor.

36. The system as recited in any of claims 30 to 35, comprising the power source.

37. An apparatus for use with a device having a rotatable member, comprising:
means for providing an explosion-proof environment;
means for dissipation charge in the rotatable member developed during operation of the device; and
means for supporting the means for reducing current nonrotatably within the means for providing.

38. An apparatus for use with an electrical device, comprising:
an explosion-proof enclosure; and
at least one conduction member nonrotatably housed in the enclosure and configured to generally abut a rotatable member of the electrical device at least partially disposed in the enclosure, wherein the conduction member is configured to affect charge in the rotatable member.

39. The apparatus as recited in claim 38, wherein the conduction member is configured to impart a voltage charge on to the rotatable member.

40. The apparatus as recited in claim 39, wherein the voltage charge is indirective of an operating condition of the electrical device.

41. The apparatus as recited in claim 38, 39 or 40 wherein the conduction member is configured to dissipate charge in the rotatable member produced during operation of the device.

42. A method for dissipating charge build-up in a rotatable member of a device during operation of the device, comprising:
disposing a dissipation brush in an explosion-proof enclosure such that the dissipation brush is configured to generally abut the rotational device member at least partially disposed in the explosion-proof enclosure; and
electrically coupling the dissipation brush to ground.

43. The method as recited in claim 42, comprising providing alternating current (ac) power to the device.

44. . The method as recited in claim 43, comprising providing pulse width modulated (PWM) power to the device.

45. The method as recited in claim 42, 43 or 44 comprising providing rectified direct current (dc) power to the device.
